(19) Europäisches Patentamt / European Patent Office / Office européen des brevets

(11) **EP 4 315 166 B1**

(12) **EUROPEAN PATENT SPECIFICATION**

(45) Date of publication and mention
of the grant of the patent:
**19.11.2025  Bulletin 2025/47**

(21) Application number: **21735619.5**

(22) Date of filing: **18.06.2021**

(51) International Patent Classification (IPC):
**G06N 3/045** (2023.01)     **G06N 3/084** (2023.01)
**G06N 3/088** (2023.01)     **G08G 1/01** (2006.01)
**G08G 1/0967** (2006.01)

(52) Cooperative Patent Classification (CPC):
**G06N 3/045; G06N 3/09;** G06N 3/084; G06N 3/088;
G08G 1/0145; G08G 1/096775

(86) International application number:
**PCT/EP2021/066554**

(87) International publication number:
**WO 2022/253449 (08.12.2022 Gazette 2022/49)**

(54) **METHOD AND SYSTEM FOR PREDICTING AND CLASSIFYING EVENT SEQUENCES EMBEDDED IN A KNOWLEDGE GRAPH**

VERFAHREN UND SYSTEM ZUR VORHERSAGE UND KLASSIFIZIERUNG VON IN EINEN WISSENSGRAPHEN EINGEBETTETEN EREIGNISSEQUENZEN

PROCÉDÉ ET SYSTÈME DE PRÉDICTION ET DE CLASSIFICATION DE SÉQUENCES D'ÉVÉNEMENTS NOYÉES DANS UN GRAPHE DE CONNAISSANCES

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **02.06.2021 EP 21177403**

(43) Date of publication of application:
**07.02.2024  Bulletin 2024/06**

(73) Proprietor: **NEC Corporation**
**Minato-ku**
**Tokyo 108-8001 (JP)**

(72) Inventors:
• **GASTINGER, Julia**
**69115 Heidelberg (DE)**
• **SCHMIDT, Mischa**
**69115 Heidelberg (DE)**
• **JACOBS, Tobias**
**69115 Heidelberg (DE)**

(74) Representative: **Ullrich & Naumann PartG mbB**
**Schneidmühlstrasse 21**
**69115 Heidelberg (DE)**

(56) References cited:
**US-A1- 2019 325 995     US-A1- 2020 356 858**
**US-A1- 2021 064 959**

• ESTEBAN CRISTOBAL ET AL: "Predicting the co-evolution of event and Knowledge Graphs", 2016 19TH INTERNATIONAL CONFERENCE ON INFORMATION FUSION (FUSION), ISIF, 5 July 2016 (2016-07-05), pages 98 - 105, XP032935000
• WANG QUAN ET AL: "CoKE: Contextualized Knowledge Graph Embedding", 4 April 2020 (2020-04-04), XP055873981, Retrieved from the Internet <URL:https://arxiv.org/pdf/1911.02168.pdf> [retrieved on 20211216]
• JACOBS TOBIAS ET AL: "ProcK: Machine Learning for Knowledge-Intensive Processes", 10 September 2021 (2021-09-10), XP055893154, Retrieved from the Internet <URL:https://arxiv.org/pdf/2109.04881.pdf> [retrieved on 20220217]

**Description**

The present invention generally relates to systems and computer-implemented methods for predicting and classifying event sequences embedded in a knowledge graph.

Knowledge graphs (KGs) are widely known in prior art and are utilized, for instance, in connection with managing knowledge-intensive processes. In this context, for example, a process instance may be defined as a sequence of events, and each event may be characterized by a number of attributes, where the attribute values are references to nodes of the knowledge graph. Given such a process instance as the input, embodiments of the present invention address the problem of accurately and efficiently predicting some property of the process instance, including but not limited to properties of future events. The links into the knowledge graph provide valuable information about the events, which the invented method and system takes into account systematically.

The computation of graph embeddings is a state-of-art approach to determine a fixed-dimensional vector representation of each entity and relation type, which can then be used as input to further machine learning tasks. For example, Q. Wang et al.: "Coke: Contextualized knowledge graph embedding", arXiv preprint arXiv:1911.02168, proposes a method to compute context-dependent embeddings, where the context of a node is a sub-graph around it. Applying this method to the problem underlying the present invention, one could compute an embedding for each node and relation of the union of the knowledge graph and all events. The event embeddings could then serve as the input for the prediction task, and the context of an event is the process instance it occurs in.

However, computing a graph embedding is a computationally intensive process requiring substantial time, processing power, and energy. In application scenarios, in which new events and new process instances arrive frequently over time, it is not an option to re-compute the embedding for each newly arrived event. To make things worse, re-computation of the embedding also triggers the need to re-train the prediction model which uses the embeddings as input, increasing computation time even more.

C. Esteban et al.: "Predicting the co-evolution of event and knowledge graphs", in 2016 19th International Conference on Information Fusion (FUSION), pp. 98-105, IEEE, addresses the problem of predicting events with regard to the knowledge graph itself, where events represent nodes and relations becoming valid or obsolete over time. In contrast to this approach, embodiments of the present invention address the problem of events that are parts of processes appearing outside the context of the knowledge graph evolution.

Furthermore, state of the art solutions are not able to do real-time updates when new events occur, and they do not take into account the order of events in a sequence. Thus, the remaining problem is the real-time prediction and classification using sequences of events embedded in knowledge graphs, including updates when new events occur.

It is therefore an object of the present invention to improve and further develop a method and a system of the initially described type for predicting and classifying event sequences embedded in a knowledge graph in such way that re real-time predictions are possible, even for knowledge-intensive processes, with high accuracy and in a computationally efficient way.

In accordance with embodiments of the invention, the aforementioned object is accomplished by a computer-implemented method according to appended independent claim 1.

Furthermore, the aforementioned object is accomplished by a system according to appended independent claim 13 and by a tangible, non-transitory computer-readable medium according to appended independent claim 14.

According to the invention, it has first been recognized that the above-mentioned objectives can be accomplished by methods and systems that use a fusion of Knowledge Graphs and Event Sequences as input data to effectively solve state representation and outcome prediction (regression or classification). Embodiments of the invention enable the efficient application of AI algorithms on the fused data, allowing to incorporate relevant background knowledge in event sequence predictions or classifications. This is relevant for a wide range of applications such as administrative case handling, cyber-physical systems with control loops, business processes, etc.

According to embodiments, the present invention relates to a method and system for predicting and classifying event sequences embedded in a knowledge graph. More specifically, embodiments of the invention provide methods and systems that provide enhanced outcome and attribute prediction for event sequences by using graph-structured knowledge in a three layered process which includes a knowledge graph embedding layer, an event embedding layer and a prediction layer. The knowledge graph embedding layer may be trained in an unsupervised manner, while the event embedding layer and prediction layer may be trained end-to-end in a supervised manner. By using graph-structured knowledge in such a three layered process, the present invention can provide enhanced outcome and attribute prediction for event sequences. The trained model may be used to dynamically update predictions when new events arrive. More specifically, the event embedding layer may be used to compute an embedding of an event, and the prediction layer may be used to update the prediction about the event sequence.

As already mentioned above, according to an embodiment the event embedding layer may be trained end-to-end in a supervised manner. In this regard, an event history containing previous event sequences with known outcomes may be used as training samples for training the event embedding layer.

According to embodiments, the event embedding layer may be configured to determine the event embedding vectors by using a parametrized function that maps the graph neighborhood of any event in the fused event and knowledge graph to a fixed-dimensional vector. In this context, it may be provided that the graph neighborhood of an event comprises the 2-hop neighborhood of the event. As will be appreciated by those skilled in the art, alternative definitions of the graph neighborhood of an event may be employed likewise (e.g., a 3-hop neighborhood).

According to embodiments of the invention, upon arrival of new events, the trained prediction model may be used to dynamically update predictions. In this regard, it may be provided that updating predictions includes using the event embedding layer to compute an embedding of the event from the embeddings of the related knowledge graph nodes. Additionally, it may be provided that the resulting embedding is fed into the prediction layer to update the predictions about the event sequence.

According to embodiments of the invention, the prediction layer may be configured to generate the prediction output by using a transformer-based sequence model. However, at this point it should be noted that the invention is not restricted to any particular model architectures for the three layers specified. Many graph embedding mechanisms (for the graph embedding layer), neighbor aggregation functions (for computing the event embeddings), and sequence models have been proposed in literature, and those skilled in the art will be able to identify and implement suitable embodiments of these layers.

According to embodiments of the invention, it may be provided that the third layer, or the second and the third layer, or all three layers is/are re-trained from time to time. In particular, such re-training may be executed as soon as an amount of new events that has arrived exceeds a critical mass defined by a configurable threshold. The amount of critical mass of new events may be configurable, or dynamically adjusted if e.g. the predictive accuracy drops below a certain threshold.

According to embodiments, the obtained predictions may be used for automated decision making in a control loop. Specifically, the control loop may be configured to receive as input a desired outcome (i.e. setpoint) and to use the trained prediction model to predict the outcome for several possible actions, leading to a several expected outcomes. The control loop may include a control element that selects those actions that lead to an expected outcome having the smallest difference to the setpoint.

According to an embodiment, the present invention relates to a tangible, non-transitory computer-readable medium having instructions thereon which, upon being executed by one or more processors, alone or in combination, provide for execution of a method according to one or more of the aspects described above.

There are several ways how to design and further develop the teaching of the present invention in an advantageous way. To this end it is to be referred to the dependent claims on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will be explained. In the drawing

Fig. 1    is a schematic view illustrating an embodiment of the present invention embedded into a control loop of a technical system for reaching a desired outcome, and

Fig. 2    is a schematic view illustrating a unified events and knowledge graph as utilized in embodiments of the present invention.

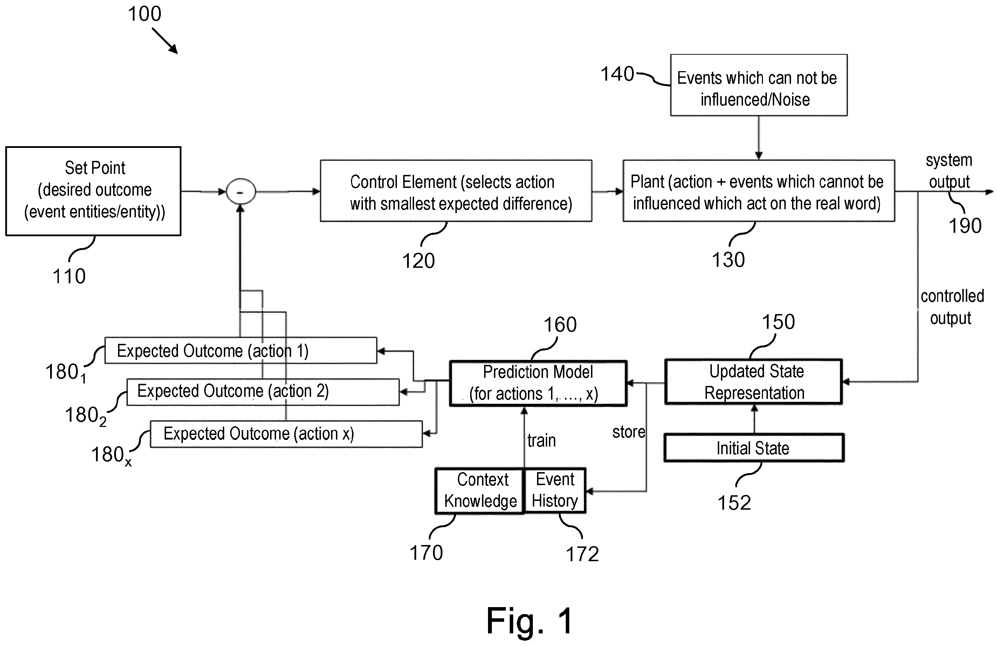

Fig. 1 schematically illustrates an embodiment of the present invention embedded in an (automated) control system 100 that is configured to select and take certain actions in order to reach a desired outcome. The desired outcome (setpoint) 110 may be defined by a user or it may be a specification set by an external system (not shown).

The control system 100 includes a control element 120 that is configured to select those actions that lead to the expected outcome having the smallest difference to the setpoint. Those actions will act on a plant (in the real world) 130, which might also be influenced by other events (which cannot be controlled) and/or noise, as shown at 140.

According to an embodiment of the invention, the output of the plant 130, i.e. a changed state, is then taken as the input to a state representation update module 150. This module 150 is configured to update the representation of the real world.

Further, the control system 100 includes a prediction model 160 to predict the outcome based on the state representation. The model 160 is trained in accordance with embodiments of the present invention by using context knowledge 170 about the application environment as well as an event history 172 collected by previous instantiations and iterations of the control loop. The model 160 is configured to predict the outcome for several possible actions, leading to several expected outcomes $180_i$. This then closes the control loop, because, again, the control system 100 will take the actions leading to an expected outcome $180_i$ close to the desired outcome 110. The system 100 will stop, as soon as the desired outcome 110 is reached.

As already mentioned above, Fig. 1 schematically illustrates a possible embedding of an embodiment of the present invention into a control system 100. In this context, the actual invention covers the components depicted in bold boxes in Fig. 1, in particular the representation and dynamic update of the state 150, as well as the model 160 for predicting the expected outcome from the Context Knowledge 170 and Event History 172. Hereinafter, these modules will be described in further detail.

As shown in Fig. 1, e.g. upon initialization, the state representation update module 150 receives as input an initial state 152. The initial state 152 contains information about the given instance of the control loop. According to an embodiment of the invention, this information may be encoded in the form of links into a Knowledge Graph, which represents the Context Knowledge 170 shown in Fig. 1. A 'state' in the context of the present invention means a representation of the past events that have been observed as part of the system output 190. Like the Initial State152, each of these events in the Updated State Representation 150 may be further characterized by links into the Knowledge Graph. The State Representation Update 150 may be executed when new events happen (i.e., the state changes). This can be due to actions (for instance, executed by the control system 100 itself, by a human user, or by any external machine or component connected to the control system 100) or due to events which can not be influenced, as shown at 140 (e.g. weather change, unexpected change in health of person, ...).

Representing the State as a Sequence of Events with links into a Knowledge Graph has the following advantages: Using a Sequence model allows for taking into account the order of events, the time information and the progress over time. Fusing the sequence of events with a knowledge graph, allows to capture the attributes for each event, but also to capture complex relationships, as well as high-order features (e.g. motifs - statistically significant subgraph structures) captured by the graph structure.

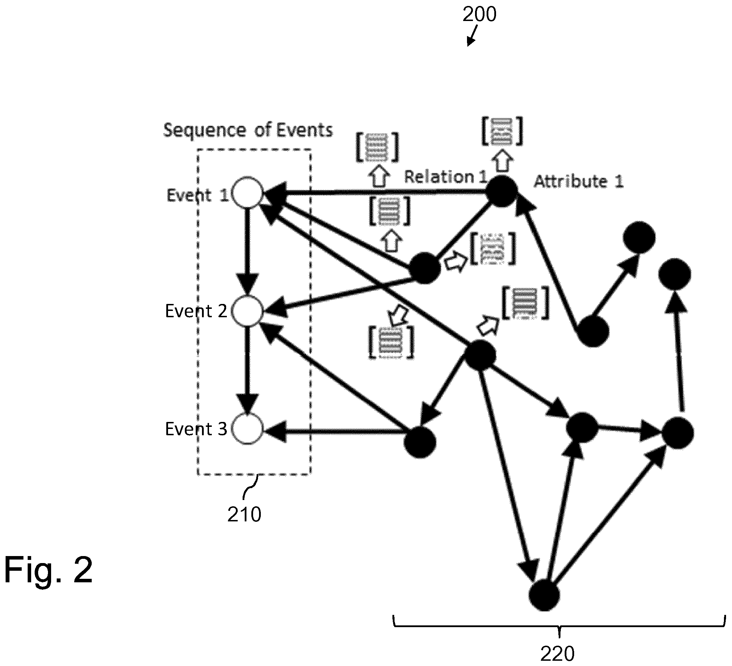

Fig. 2 schematically illustrates a fused event and knowledge graph 200, i.e. the fusion or unification of a sequence of events 210 (including events 1, ... ,*n*; here for the sake of simplification only with *n* = 3) with a knowledge graph 220 representing the context knowledge in accordance with an embodiment of the present invention. As can be obtained from Fig. 2, the fused event and knowledge graph 200 after knowledge fusion contains the Sequence of Events (bright circles), the entities (dark circles) describing the attributes relevant for the respective scenario, relations among them (arrows) as well as their embeddings. It is important to note that the fused event and knowledge graph 200 also includes relations between events of the event sequence 210 and nodes/entities of the knowledge graph 220.

According to embodiments of the invention, the machine learning prediction model 160 may be specifically designed to take all available structural information into account, including the knowledge graph 220, the stream/sequence of events 210, and the links between those parts, which form the unified graph 200. Furthermore, the machine learning prediction model 160 may be designed to enable real-time predictions in face of new events that are again inter-linked with the knowledge graph 220, without having to run the training procedure again even though the structure of the unified graph 200 may have changed.

According to embodiments of the invention, the machine learning model is built up from three layers with a specific training methodology in order to achieve both of the above design goals. More specifically, the prediction model 160 may be composed of the following three layers:

1. A Graph Embedding Layer (first layer).

The Graph Embedding Layer may be a configured to assign a fixed-dimensional graph embedding vector to each node and relation type in the fused Event and Knowledge Graph 200. As explained above, the fused graph 200 contains all available structural information, including events, knowledge graph nodes, and the links between them. This way it is made sure that the full potential of the available information is made use of. The output of the first layer, i.e. the graph embedding vectors, may serve as the input to the next, i.e. the second layer.

2. An Event Embedding Layer (second layer).

The Event Embedding Layer may be configured to receive as input the graph embedding vectors from the first layer, and to assign to each event a fixed-dimensional event embedding vector. This vector may be determined by a parameterized function mapping the graph neighborhood (e.g. 2-hop neighborhood) of any event in the fused event and knowledge graph 200 to a fixed-dimensional vector.

In this context, it is important to note that events are also nodes of the fused graph 200, so already in the first layer they have received an embedding vector. However, in the second layer they receive an embedding vector that only depends on their neighborhood in the knowledge graph.

3. A Prediction Layer (third layer).

The Prediction Layer may be configured to receive as input a sequence of event embeddings from the second layer, and to provide as output a prediction of an unknown property of the event sequence used as input, including but not limited to expected outcomes of actions. For example, if the outcome is discrete (e.g. a court decision 'charge decision because enough evidence gathered', or 'charge decision because not enough evidence gathered', or 'charge decision for other reasons'; or a patient outcome 'person healthy', 'person non-healthy'), the prediction layer will function as a classifier. On the other hand, if the outcome is continuous (e.g. blood pressure of a person), the sequence model will be a regression model.

According to an embodiment of the invention, the model training may be performed as follows:

The first layer of the prediction model, i.e. the graph embedding layer, may be trained using an unsupervised graph embedding training algorithm on the unified events and knowledge graph 200. The goal of this training step is to obtain a meaningful representation of the graph nodes and relation types. Taking not only the knowledge graph 220 as input for the embedding training, but taking the events as well has the advantageous effect of discovering additional relations that were not present in the pure knowledge graph 220 (for example, a pair of drugs that are often prescribed together are likely to be related to each other).

The second and the third layers of the prediction model, i.e. the event embedding layer and the prediction layer, may be trained together in an end-to-end fashion using supervised learning. It is assumed that the event history contains previous event sequences with known outcomes, which can be used as training or validation examples.

According to embodiments of the invention, it may be provided that, as new events arrive, the event embedding layer is used to compute an embedding of the new events, and those embeddings are used as input to the prediction layer, updating the predictions. Usage of the event embedding layer has the advantage of not having to re-train as new events arrive.

According to an embodiment, the present invention provides a computer-implemented method for event sequence forecasting comprising the steps of

1) embedding relevant graph-structured knowledge based on a first embedding layer trained in an unsupervised manner;

2) embedding observed event sequences and predicting future events or their attributes based on a second (event) embedding layer (e.g. using a simple aggregation function) and a third prediction layer (e.g. using a transformer-based sequence model) where both the second and the third layer are trained end-to-end in a supervised manner;

3) upon arrival of a new event dynamically updating predictions by

a. using the event embedding layer to compute an embedding of the event from the embeddings of the related knowledge graph nodes, and

b. feeding the resulting embedding into the prediction layer to update the prediction about the event sequence.

4) using the obtained predictions for automated decision making in a control loop.

Over time, new event sequences will be recorded by the system, and new training labels will become available. Therefore, it will be beneficial to re-train the three layers from time to time. To save computational resources, it is possible to re-train only the third layer, or only the second and third layer.

It should be noted that the present invention does not impose any restrictions on the model architectures for the three layers specified. As such, any graph embedding mechanism (for the graph embedding layer), neighbor aggregation functions (for computing the event embeddings), and sequence models as described in literature may be employed.

In an embodiment of the event embedding layer, for each event, the layer may provided as an input a set of vectors (e.g. the embeddings of entities and relationships in the events' 2-hop neighborhood) $V = \{v_1, v_2, \ldots, v_l\}$, with $v_i \in \mathbb{R}^{n \times 1}$, $i \in 1, \ldots, l$. Here, $l$ describes the maximum number of 2-hop neighbors any entity has, and $v_l, \ldots v_{l-k} = [\bar{0}] \in \mathbb{R}^{n \times 1}$ if an event has $l - k$ 2-hop neighbors. $n$ describes the fixed number of elements in the embedding vectors. As an output, an aggregation function may give a vector $v_{agg} \in \mathbb{R}^{n \times 1}$. The machine learning model may then be initialized to return the mean of the input vectors $v_{agg,0} = mean(v_1, v_2, \ldots, v_l)$, but will be trained to update its parameters in an end-to-end training process as described above .

Embodiments of the present invention provide to the advantage that, by integrating knowledge graphs into the prediction of event sequences, performance accuracy is significantly improved. Furthermore, embodiments of the present invention are computationally more efficient than prior art solutions since there is no need to (re)compute node embeddings as new events are observed by the system (in fact, only occasional retraining is advisable).

According to embodiments of the invention, the prediction model 160 including the context knowledge 170 and the event history 172, as well as the updated state representation module 150 including the initial state 152 shown in Fig. 1, should be understood to be implemented to be part of a processing system for event sequence forecasting of a process instance in accordance with embodiments of the present invention. As will be appreciated by those skilled in the art, the processing system may include one or more processors, such as a central processing unit (CPU) of a computing device or a distributed processor system. The processors execute processor-executable instructions for performing the functions and methods described herein. In embodiments, the processor executable instructions are locally stored or remotely stored and accessed from a non-transitory computer readable medium, which may be a hard drive, cloud storage, flash drive, etc. A read-only memory may include processor-executable instructions for initializing the processors, while a random-access memory (RAM) may be the main memory for loading and processing instructions executed by the processors. A network interface may connect to a wired network or cellular network and to a local area network or wide area network, such as the Internet, and may be used to receive and/or transmit data, including ANN training datasets such as datasets representing one or more images. The processing system may be embodied in smartphones, tablets, servers or other types of computer devices. The processing system, which can be connected alone or with other devices to a bus, can be used to implement the protocols, devices, mechanisms, systems and methods described herein.

Embodiments of the present invention can be implemented in the context of various application scenarios. Generally, any time-dependent process or control problem could be a targeted that can be expressed as a sequence of events and for which knowledge can be graph-modeled. Hereinafter, two exemplary use cases are outlined in some more detail:

1. Health Care: Patient Treatment

This use case is about the treatment of a patient in the hospital. The patient with their symptoms, background information, and health-related attributes (e.g. age, weight, ...) is represented in the knowledge graph. The treatment steps for the patient are the events in the process. The goal is to predict the outcome, i.e. will the patient be cured or not with the given attributes and (planned) treatment steps. By formulating the problem in this way, it will be possible to simulate potential future treatment steps and analyze the different predicted outcomes. When treatment steps are actually happening in real-life the embedding and representation will be modified in real-time, in order to timely react to changes. The outcome of this simulation will be used to adapt the treatment steps: The outcomes of the simulation can be evaluated and applied by a human, e.g., by adjusting the medical devices (e.g. ventilator or the amount of morphine). Alternatively, these devices can be directly adjusted without a human in the loop to directly modify a machine to give more or less medicine - or to modify the dispensed daily amount and/or mix medication for patients on an individual level (within pre-defined bounds or according to bounds derived from a knowledge graph). For instance, the outcomes of the simulation may be used for controlling a medication dispensing robot (as described in https://www.pc-control.net/pdf/special_packaging_2014/solutions/ pcc_special_packaging_2014_eco-dex_d.pdf).

2. Smart City: Traffic Control

The sensor network of a smart city provides a rich set of information including satisfaction of the citizen, crimes, waste, traffic issues, control of water and electricity. In this context, methods and systems described herein are able to provide recommendations to optimize and redirect the traffic flow in respect of pollution, scene of crime, traffic jams. Hence, it may be provided that all of this information is gathered through the sensor network as a Knowledge Graph and that the future development/trend for a city district is computed and predicted. Events in this case are for example traffic jams, road accidents, road blocks, high traffic volume, described over time by the event sequence. A timely reaction is needed in order to assure safety of all people at all time-steps (e.g., timely reaction to traffic accidents). The knowledge graph is needed in order to include information on relations and structures given in the city (e.g., road networks). The system predicts the outcome, e.g. "high fine dust pollution expected on a certain day". Based on the predictions an intelligent traffic routing system can adjust the traffic for that day, e.g. conduct automated road blocks and adjust traffic lights.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A computer-implemented method for event sequence forecasting of a process instance, a process instance being a sequence of events (140) influencing a plant (130), the method comprising:

building up and training a three-layered prediction model (160) including a first, a second and a third layer,
wherein the first layer is a graph embedding layer that assigns a fixed-dimensional graph embedding vector to each node and relation type in a fused event and knowledge graph (200) that contains available structural information (172) including events influencing the plant, knowledge graph nodes, and the links between the events influencing the plant and the knowledge graph nodes,
wherein the second layer is an event embedding layer that assigns to each event of the process instance a fixed-dimensional event embedding vector as a state representation, wherein an output of the first layer is used as input to the second layer, and
wherein the third layer is a prediction layer that receives as input a sequence of event embeddings from the second layer and that generates as output, based on the state representation, a prediction of an unknown property of the event sequence used as input, wherein the unknown property comprises an expected outcome of an action to act on the plant ($180_1$, ..., $180_x$), and using the obtained predictions for automated decision making in a control loop controlling the plant (130), wherein the control loop is configured to select (120) those actions to act on the plant (130) that lead to the expected outcome having the smallest difference to a desired outcome, wherein the desired outcome is defined by a user or by a specification set by an external system (110), and wherein the system output (190) comprises a changed state of the plant (130) and is used to update (150) the links between the events influencing the plant and the knowledge graph nodes of the knowledge graph (200) of the prediction model (160).

2. The method according to claim 1, wherein the graph embedding layer is trained in an unsupervised manner.

3. The method according to claim 1 or 2, wherein the event embedding layer and the prediction layer are trained end-to-end in a supervised manner.

4. The method according to claim 3, wherein an event history (172) containing previous event sequences with known outcomes is used as training samples for training the event embedding layer.

5. The method according to any of claims 1 to 4, wherein the event embedding layer determines the event embedding vectors by using a parametrized function that maps the graph neighborhood of any event in the fused event and knowledge graph (200) to a fixed-dimensional vector.

6. The method according to claim 5, wherein the graph neighborhood of an event comprises the 2-hop neighborhood of the event.

7. The method according to any of claims 1 to 6, further comprising, upon arrival of a new event, using the trained prediction model (160) to dynamically update predictions.

8. The method according to claim 7, wherein updating predictions includes

   using the event embedding layer to compute an embedding of the event from the embeddings of the related nodes of the fused event and knowledge graph (200); and
   feeding the resulting embedding into the prediction layer to update the predictions about the event sequence (210).

9. The method according to any of claims 1 to 8, wherein the prediction layer generates the prediction output by using a transformer-based sequence model.

10. The method according to any of claims 1 to 9, further comprising:
    re-training the third layer, or the second and third layer, or all three layers, as soon as an amount of new events that has arrived exceeds a critical mass defined by a configurable threshold.

11. The method according to claim 10, wherein the threshold defining the critical mass of new events is dynamically adjusted if the predictive accuracy drops below a certain threshold.

12. The method according to one of claims 1 to 11, wherein the control loop is a closed control loop that receives as input a desired outcome (110), that uses the trained prediction model (160) to predict the outcome for several possible actions, leading to several expected outcomes (180), and that includes a control element (120) that selects those actions that lead to an expected outcome (180) having the smallest difference to the desired outcome (110).

13. A system for event sequence forecasting of a process instance, the system comprising one or more processors configured to perform the method according to any one of the claims 1 to 12.

14. A tangible, non-transitory computer-readable medium having instructions thereon which, upon being executed by one or more processors, provide for execution of the method according to any one of claims 1 to 12.

**Patentansprüche**

1. Computerimplementiertes Verfahren zur Vorhersage der Ereignisabfolge einer Prozessinstanz, wobei eine Prozessinstanz eine Abfolge von Ereignissen (140) ist, die eine Anlage (130) beeinflussen, wobei das Verfahren umfasst:

   Aufbauen und Trainieren eines dreischichtigen Vorhersagemodells (160) mit einer ersten, einer zweiten und einer dritten Schicht,
   wobei die erste Schicht eine Graph-Einbettungsschicht ist, die jedem Knoten und Beziehungstyp in einem fusionierten Ereignis- und Wissensgraphen (200), welcher verfügbare Strukturinformationen (172) enthält, einschließlich Ereignissen, die die Anlage beeinflussen, Wissensgraphknoten und den Verknüpfungen zwischen den Ereignissen, die die Anlage beeinflussen, und den Wissensgraphknoten, einen Graph-Einbettungsvektor fester Dimension zuweist,

wobei die zweite Schicht eine Ereignis-Einbettungsschicht ist, die jedem Ereignis der Prozessinstanz einen Ereignis-Einbettungsvektor fester Dimension als Zustandsdarstellung zuweist, wobei eine Ausgabe der ersten Schicht als Eingabe für die zweite Schicht verwendet wird, und

wobei die dritte Schicht eine Vorhersageschicht ist, die als Eingabe eine Abfolge von Ereignis-Einbettungen aus der zweiten Schicht empfängt und die als Ausgabe auf der Grundlage der Zustandsdarstellung eine Vorhersage einer unbekannten Eigenschaft der als Eingabe verwendeten Ereignisabfolge erzeugt, wobei die unbekannte Eigenschaft ein erwartetes Ergebnis ($180_1$, ..., $180_x$) einer Aktion, die auf die Anlage einwirkt, umfasst, und

Verwenden der erhaltenen Vorhersagen für eine automatisierte Entscheidungsfindung in einer Regelschleife, die die Anlage (130) steuert, wobei die Regelschleife so konfiguriert ist, dass sie diejenigen Aktionen, die auf die Anlage (130) einwirken, auswählt (120), die zu dem erwarteten Ergebnis mit der geringsten Abweichung von einem gewünschten Ergebnis führen, wobei das gewünschte Ergebnis von einem Benutzer oder durch eine von einem externen System (110) festgelegte Spezifikation definiert wird, und wobei die Systemausgabe (190) einen veränderten Zustand der Anlage (130) umfasst und dazu verwendet wird, die Verknüpfungen zwischen den Ereignissen, die die Anlage beeinflussen, und den Wissensgraphknoten des Wissensgraphen (200) des Vorhersagemodells (160) zu aktualisieren (150).

2. Verfahren nach Anspruch 1, wobei die Graph-Einbettungsschicht auf unüberwachte Weise trainiert wird.

3. Verfahren nach Anspruch 1 oder 2, wobei die Ereignis-Einbettungsschicht und die Vorhersageschicht durchgängig überwacht trainiert werden.

4. Verfahren nach Anspruch 3, wobei eine Ereignishistorie (172), die frühere Ereignisabfolgen mit bekannten Ergebnissen umfasst, als Trainingsbeispiele zum Trainieren der Ereignis-Einbettungsschicht verwendet wird.

5. Verfahren nach einem der Ansprüche 1 bis 4, wobei die Ereignis-Einbettungsschicht die Ereignis-Einbettungsvektoren unter Verwendung einer parametrisierten Funktion bestimmt, welche die Graphen-Nachbarschaft eines beliebigen Ereignisses in dem fusionierten Ereignis- und Wissensgraphen (200) auf einen Vektor mit fester Dimension abbildet.

6. Verfahren nach Anspruch 5, wobei die Graphen-Nachbarschaft eines Ereignisses die 2-Hop-Nachbarschaft des Ereignisses umfasst.

7. Verfahren nach einem der Ansprüche 1 bis 6, das ferner umfasst, dass bei Eintreffen eines neuen Ereignisses das trainierte Vorhersagemodell (160) verwendet wird, um Vorhersagen dynamisch zu aktualisieren.

8. Verfahren nach Anspruch 7, wobei das Aktualisieren von Vorhersagen umfasst:

Verwenden der Ereignis-Einbettungsschicht, um eine Einbettung des Ereignisses aus den Einbettungen der zugehörigen Knoten des fusionierten Ereignis- und Wissensgraphen (200) zu berechnen; und
Einspeisen der resultierenden Einbettung in die Vorhersageschicht, um die Vorhersagen über die Ereignisabfolge (210) zu aktualisieren.

9. Verfahren nach einem der Ansprüche 1 bis 8, wobei die Vorhersageschicht die Vorhersageausgabe unter Verwendung eines Transformator-basierten Sequenzmodells erzeugt.

10. Verfahren nach einem der Ansprüche 1 bis 9, das ferner umfasst:
Neutrainieren der dritten Schicht oder der zweiten und dritten Schicht oder aller drei Schichten, sobald eine Menge neuer Ereignisse, die eingetroffen sind, eine kritische Masse überschreitet, welche durch einen konfigurierbaren Schwellenwert definiert ist.

11. Verfahren nach Anspruch 10, wobei der Schwellenwert, der die kritische Masse neuer Ereignisse definiert, dynamisch angepasst wird, wenn die Vorhersagegenauigkeit unter einen bestimmten Schwellenwert fällt.

12. Verfahren nach einem der Ansprüche 1 bis 11, wobei die Regelschleife eine geschlossene Regelschleife ist, die als Eingabe ein gewünschtes Ergebnis (110) empfängt, die das trainierte Vorhersagemodell (160) verwendet, um das Ergebnis für mehrere mögliche Aktionen vorherzusagen, die zu mehreren erwarteten Ergebnissen (180) führen, und die ein Steuerelement (120) umfasst, das diejenigen Aktionen auswählt, die zu einem erwarteten Ergebnis (180) mit der geringsten Abweichung von dem gewünschten Ergebnis (110) führen.

**13.** System zur Vorhersage der Ereignisabfolge einer Prozessinstanz, wobei das System einen oder mehrere Prozessoren umfasst, die so konfiguriert sind, dass sie das Verfahren nach einem der Ansprüche 1 bis 12 ausführen.

**14.** Greifbares, nicht flüchtiges, computerlesbares Speichermedium mit Anweisungen, die bei Ausführung durch einen oder mehrere Prozessoren die Ausführung des Verfahrens nach einem der Ansprüche 1 bis 12 bewirken.

## Revendications

**1.** Procédé mis en œuvre par ordinateur de prévision de séquence d'événements d'une instance de processus, une instance de processus étant une séquence d'événements (140) influençant une installation (130), le procédé comportant :

la construction et l'entraînement d'un modèle de prédiction à trois couches (160) incluant une première, une deuxième et une troisième couche,
dans lequel la première couche est une couche de plongement de graphe qui attribue un vecteur de plongement de graphe de dimension fixe à chaque type de nœud et de relation dans un graphe d'événements et de connaissances fusionné (200) qui contient des informations structurales disponibles (172) incluant des événements influençant l'installation, des nœuds de graphe de connaissances et les liens entre les événements influençant l'installation et les nœuds de graphe de connaissances,
dans lequel la deuxième couche est une couche de plongement d'événements qui attribue à chaque événement de l'instance de processus un vecteur de plongement d'événement de dimension fixe en tant que représentation d'état, dans lequel une sortie de la première couche est utilisée comme entrée pour la deuxième couche, et
dans lequel la troisième couche est une couche de prédiction qui reçoit en entrée une séquence de plongements d'événements provenant de la deuxième couche et qui génère en sortie, sur la base de la représentation d'état, une prédiction d'une propriété inconnue de la séquence d'événements utilisée en entrée, dans lequel la propriété inconnue comporte un résultat attendu d'une action permettant d'agir sur l'installation $(180_1, ..., 180_x)$, et
l'utilisation des prédictions obtenues pour une prise de décision automatisée dans une boucle de commande commandant l'installation (130), dans lequel la boucle de commande est configurée pour sélectionner (120) ces actions permettant d'agir sur l'installation (130) qui conduisent au résultat attendu présentant la plus petite différence par rapport à un résultat souhaité, dans lequel le résultat souhaité est défini par un utilisateur ou par une spécification définie par un système externe (110), et dans lequel la sortie de système (190) comporte un état modifié de l'installation (130) et est utilisée pour mettre à jour (150) les liens entre les événements influençant l'installation et les nœuds de graphe de connaissances du graphe de connaissances (200) du modèle de prédiction (160).

**2.** Procédé selon la revendication 1, dans lequel la couche de plongement de graphe est entraînée de manière non supervisée.

**3.** Procédé selon la revendication 1 ou 2, dans lequel la couche de plongement d'événements et la couche de prédiction sont entraînées de bout en bout de manière supervisée.

**4.** Procédé selon la revendication 3, dans lequel un historique d'événements (172) contenant des séquences d'événements précédentes avec des résultats connus est utilisé comme échantillons d'entraînement pour entraîner la couche de plongement d'événements.

**5.** Procédé selon l'une quelconque des revendications 1 à 4, dans lequel la couche de plongement d'événements détermine les vecteurs de plongement d'événements en utilisant une fonction paramétrée qui mappe le voisinage de graphe de tout événement dans le graphe d'événements et de connaissances fusionné (200) vers un vecteur de dimension fixe.

**6.** Procédé selon la revendication 5, dans lequel le voisinage de graphe d'un événement comporte le voisinage à 2 bonds de l'événement.

**7.** Procédé selon l'une quelconque des revendications 1 à 6, comportant en outre, à l'arrivée d'un nouvel événement, l'utilisation du modèle de prédiction (160) entraîné pour mettre à jour dynamiquement des prédictions.

**8.** Procédé selon la revendication 7, dans lequel la mise à jour de prédictions inclut l'utilisation de la couche de plongement d'événements pour calculer un plongement de l'événement à partir des plongements des nœuds liés du graphe d'événements et de connaissances fusionné (200) ; et
l'injection du plongement résultant dans la couche de prédiction pour mettre à jour les prédictions concernant la séquence d'événements (210).

**9.** Procédé selon l'une quelconque des revendications 1 à 8, dans lequel la couche de prédiction génère la sortie de prédiction en utilisant un modèle de séquence basé sur un transformateur.

**10.** Procédé selon l'une quelconque des revendications 1 à 9, comportant en outre :
le réentraînement de la troisième couche, ou de la deuxième et de la troisième couche, ou des trois couches, dès qu'une quantité de nouveaux événements arrivés dépasse une masse critique définie par un seuil configurable.

**11.** Procédé selon la revendication 10, dans lequel le seuil définissant la masse critique de nouveaux événements est ajusté dynamiquement si la précision prédictive chute en dessous d'un certain seuil.

**12.** Procédé selon l'une des revendications 1 à 11, dans lequel la boucle de commande est une boucle de commande fermée qui reçoit en entrée un résultat souhaité (110), qui utilise le modèle de prédiction (160) entraîné pour prédire le résultat de plusieurs actions possibles, conduisant à plusieurs résultats attendus (180), et qui inclut un élément de commande (120) qui sélectionne les actions qui conduisent à un résultat attendu (180) présentant la plus petite différence par rapport au résultat souhaité (110).

**13.** Système de prévision de séquence d'événements d'une instance de processus, le système comportant un ou plusieurs processeurs configurés pour réaliser le procédé selon l'une quelconque des revendications 1 à 12.

**14.** Support tangible, non transitoire, lisible par ordinateur, ayant des instructions sur celui-ci qui, lorsqu'elles sont exécutées par un ou plusieurs processeurs, prévoient l'exécution du procédé selon l'une quelconque des revendications 1 à 12.

Fig. 1

EP 4 315 166 B1

Fig. 2

EP 4 315 166 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Q. WANG et al.** Coke: Contextualized knowledge graph embedding. *arXiv preprint arXiv:1911.02168*

- Predicting the co-evolution of event and knowledge graphs. **C. ESTEBAN et al.** 9th International Conference on Information Fusion (FUSION). IEEE, 2016, 98-105